(19) Europäisches Patentamt
European Patent Office
Office européen des brevets

(11) EP 3 464 458 B1

(12) EUROPEAN PATENT SPECIFICATION

(45) Date of publication and mention of the grant of the patent:
**22.11.2023 Bulletin 2023/47**

(21) Application number: **17721408.7**

(22) Date of filing: **09.05.2017**

(51) International Patent Classification (IPC):
***C08L 23/10*** *(2006.01)*

(52) Cooperative Patent Classification (CPC):
(C-Sets available)
**C08L 23/10;** C08L 2201/10; C08L 2203/16; C08L 2205/03 (Cont.)

(86) International application number:
**PCT/EP2017/060996**

(87) International publication number:
**WO 2017/202600 (30.11.2017 Gazette 2017/48)**

# (54) FILM COMPRISING A POLYOLEFIN COMPOSITION

FOLIE MIT EINER POLYOLEFINZUSAMMENSETZUNG

FILM COMPRENANT UNE COMPOSITION DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2016 EP 16171218**

(43) Date of publication of application:
**10.04.2019 Bulletin 2019/15**

(73) Proprietor: **Basell Poliolefine Italia S.r.l.**
**20121 Milano (IT)**

(72) Inventors:
- **GALVAN, Monica**
  **44122 Ferrara (IT)**
- **PERDOMI, Gianni**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-2012/093099** **WO-A1-2015/161398**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/10, C08L 23/08, C08L 23/08**

## Description

FIELD OF THE INVENTION

The present disclosure relates to films in particular cast or blown or bioriented films having excellent optical properties comprising a polyolefin blend containing propylene based polymers and LLDPE

BACKGROUND OF THE INVENTION

Films made of propylene copolymers or terpolymers are known in the art.

WO 03/076511 relates to a masterbatch composition comprising (percentage by weight):

1) 10-50%, of a crystalline propylene homopolymer;
2) 50-90%, of a blend consisting of:

    a) a copolymer of ethylene and one or more a-olefin(s) and containing 10-40%, of said C4-C10 a-olefin(s) (copolymer (a)), and
    b) an amorphous copolymer of propylene and ethylene (copolymer (b)).

Component a) has a xylene soluble content ranging from 30 to 80%. This document does not relate to film obtainable by this composition.

SUMMARY OF THE INVENTION

The applicant found that a composition comprising propylene-base polymers and LLDPE can be used for the production of films, in particular cast or blown or bioriented films having excellent optical properties.

Thus the present disclosure is directed to a film preferably a cast film comprising a polyolefin composition comprising:

A) 5-35% by weight of a propylene homopolymer containing 5% by weight or less of a fraction soluble in xylene at 25°C ($XS_A$), or a propylene ethylene copolymer containing 90% by weight or more of propylene units; containing 5% by weight or less of a fraction soluble in xylene at 25°C ($XS_A$), both the amount of propylene units and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C ($XS_C$), both the amount of ethylene units and of the fraction $XS_C$ being referred to the weight of (C);
the amounts of (A), (B) and (C) being referred to the total weight of (A) + (B) + (C), the sum of the amount of (A) + (B) + (C) being 100.

DETAILED DESCRIPTION OF THE INVENTION

Thus the present disclosure is directed to a film preferably a cast film comprising a polyolefin composition comprising:

A) 5-35% by weight; preferably 10-30 % by weight; more preferably 15-23%by weight of a propylene homopolymer containing 5% by weight or less of a fraction soluble in xylene at 25°C ($XS_A$), or a propylene ethylene copolymer containing 90% by weight or more preferably 95 % by weight or more; preferably 97 % by weight or more of propylene units; containing 5% by weight or less of a fraction soluble in xylene at 25°C ($XS_A$), both the amount of propylene units and of the fraction $XS_A$ being referred to the weight of A);
B) 20-50% by weight; preferably 25-45% by weight; more preferably 30-40 % by weight of a copolymer of ethylene and a $C_3$-$C_8$ alpha-olefin containing from 0.1% to 20% by weight; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C ($XS_B$), both the amount of alpha-olefin units and of the fraction $XS_B$ being referred to the weight of (B); and
C) 30-60% by weight; preferably 35-55% by weight; more preferably 40-50 % by weight of a copolymer of ethylene

and propylene containing from 25% to 75% by weight; preferably from 37% to 65% by weight; more preferably from 45% to 58% by weight of ethylene units and containing from 40% to 95% by weight of a fraction soluble in xylene at 25°C ($XS_C$), both the amount of ethylene units and of the fraction $XS_C$ being referred to the weight of (C);
the amounts of (A), (B) and (C) being referred to the total weight of (A) + (B) + (C), the sum of the amount of (A) + (B) + (C) being 100.

Component (A) preferably has the melt flow rate (230°C/2.16 kg) ranging between 50 and 200 g/10 min; more preferably between 80 and 170 g/10 min.
Components (A)+ (B) blended together have the melt flow rate (230°C/2.16 kg) comprised between 0.1 and 70 g/10 min. preferably between 1 and 50 g/10 min; more preferably between 8 and 40 g/10 min.
Preferably component B) has a density (determined according to ISO 1183 at 23°C) of from 0.940 to 0.965 g/cm$^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.
Preferably the polyolefin composition has a melt flow rate (230°C/2.16 kg) comprised between 0.5 to 25 g/10min preferably from 0.8 to 20.0g/10min; even more preferably from 1.0 to 18.0g/10min..
Preferably the polyolefin composition has an intrinsic viscosity [η] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.
For the present disclosure the term "copolymer" comprises only polymers containing two kinds of comonomers such as propylene and ethylene or ethylene and 1-butene.
The polyolefin composition is particularly fit for the production of films, in particular cast film, blown film and and biaxially oriented films. The film obtained with the polyolefin composition have excellent optical properties in particular a very low haze.
It has been found that the polyolefin composition can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.
The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.
Reaction time, pressure and temperature relative to the polymerization steps are not critical, however it is best if the temperature is from 50 to 100 °C. The pressure can be atmospheric or higher.
The regulation of the molecular weight is carried out by using known regulators, hydrogen in particular.
The said polymerizations are preferably carried out in the presence of a Ziegler-Natta catalyst. Typically a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on $MgCl_2$.
Particularly preferred catalysts comprise the product of the reaction of said organometallic compound of group 1, 2 or 13 of the Periodic Table of elements, with a solid catalyst component comprising a Ti compound and an electron donor compound supported on MgCl2.
Preferred organometallic compounds are the aluminum alkyl compounds.
Thus in a preferred embodiment, the polymer composition B) of the present invention is obtainable by using a Ziegler-Natta polymerization catalyst, more preferably a Ziegler-Natta catalyst supported on MgCl2, even more preferably a Ziegler-Natta catalyst comprising the product of reaction of:

1) a solid catalyst component comprising a Ti compound and an electron donor (internal electron-donor) supported on MgCl2;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.
Catalysts having the above mentioned characteristics are well known in the patent literature; particularly advantageous are the catalysts described in US patent 4,399,054 and European patent 45977.
Particularly suited among the said electron-donor compounds are phthalic acid esters, preferably diisobutyl phthalate, and succinic acid esters.

Suitable succinic acid esters are represented by the formula (I):

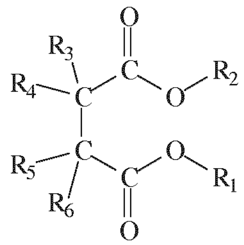

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

R1 and R2 are preferably C1-C8 alkyl, cycloalkyl, aryl, arylalkyl and alkylaryl groups. Particularly preferred are the compounds in which R1 and R2 are selected from primary alkyls and in particular branched primary alkyls. Examples of suitable R1 and R2 groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R3 to R5 are hydrogen and R6 is a branched alkyl, cycloalkyl, aryl, arylalkyl and alkylaryl radical having from 3 to 10 carbon atoms. Another preferred group of compounds within those of formula (I) is that in which at least two radicals from R3 to R6 are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R3 and R5 or R4 and R6 are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Altriethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula R1aR2bSi(OR3)c, where a and b are integer numbers from 0 to 2, c is an integer from 1 to 3 and the sum (a+b+c) is 4; R1, R2 and R3 are alkyl, cycloalkyl or aryl radicals with 1-18 carbon atoms optionally containing heteroatoms.

Useful examples of silicon compounds are (tert-butyl)2Si(OCH3)2, (cyclohexyl)(methyl)Si (OCH3)2, (phenyl)2Si(OCH3)2 and (cyclopentyl)2Si(OCH3)2.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The following examples are given in order to illustrate, but not limit the present disclosure.

## EXAMPLES

### CHARACTERIZATIONS

#### Xylene-soluble faction at 25°C (XS or Xs)

The Xylene Soluble fraction was measured according to ISO 16152, 2005, but with the following deviations (between brakets what prescribed by the ISO 16152)

The solution volume is 250 ml (200 ml);
During the precipitation stage at 25°C for 30 min, the solution, for the final 10 minutes, is kept under agitation by a magnetic stirrer (30 min, without any stirring at all);
The final drying step is done under vacuum at 70°C (100 °C);
The content of said xylene-soluble fraction is expressed as a percentage of the original 2.5 grams and then, by difference (complementary to 100), the xylene unsoluble %;
XS of components B) and C) have been calculated by using the formula;

$$XS_{tot}=WaXS_A+WbXS_B+WcXS_C$$

wherein Wa, Wb and Wc are the relative amount of components A, B and C (A+B+C=1)

**Melt Flow Rate (MFR)**

Measured according to ISO 1133 at 230°C with a load of 2.16 kg, unless otherwise specified.

**Intrinsic viscosity IV**

The sample is dissolved in tetrahydronaphthalene at 135 °C and then is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

**Comonomer (C2 and C4) content**

Comonomer ($C_2$ and $C_4$) content

The content of comonomers was determined by infrared spectroscopy by collecting the IR spectrum of the sample vs. an air background with a Fourier Transform Infrared spectrometer (FTIR). The instrument data acquisition parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about g 1 of sample between two aluminum foils. A small portion was cut from this sheet to mold a film. The film thickness was set in order to have a maximum absorbance of the $CH_2$ absorption band recorded at -720 $cm^{-1}$ of 1.3 a.u. (% Transmittance > 5%). Molding conditions were 180±10°C (356°F) and pressure was around 10 kg/$cm^2$ (142.2 PSI) for about one minute. The pressure was then released, the sample removed from the press and cooled to room temperature. The spectrum of pressed film sample was recorded in absorbance vs. wavenumbers ($cm^{-1}$). The following measurements were used to calculate ethylene ($C_2$) and 1-butene ($C_4$) contents:

a) Area ($A_t$) of the combination absorption bands between 4482 and 3950 $cm^{-1}$ which is used for spectrometric normalization of film thickness.
b) Area ($A_{C2}$) of the absorption band due to methylenic sequences ($CH_2$ rocking vibration) in the range 660 to 790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum The reference spectrum is obtained by digital subtraction of a linear polyethylene from a $C_2C_4$ copolymer, in order to extract the $C_4$ band (ethyl group at -771 cm-1).

The ratio $A_{C2}$ / $A_t$ is calibrated by analyzing ethylene-propylene standard copolymers of known compositions, determined by NMR spectroscopy.

The assignments of the spectra, the evaluation of triad distribution and the composition were made according to Kakugo ("Carbon-13 NMR determination of monomer sequence distribution in ethylene-propylene copolymers prepared with δ-titanium trichloridediethylaluminum chloride" M. Kakugo, Y. Naito, K. Mizunuma and T. Miyatake, Macromolecules, 1982, 15, 1150).

In order to calculate the ethylene ($C_2$) and 1-butene ($C_4$) content, calibration curves were obtained by using samples of known amount of ethylene and 1-butene detected by $^{13}$C-NMR.

Calibration for ethylene - A calibration curve was obtained by plotting $A_{C2}/A_t$ versus ethylene molar percent (%C2m), and the coefficient $a_{C2}$, $b_{C2}$ and $c_{C2}$ then calculated from a "linear regression".

Calibration for 1-butene - A calibration curve was obtained by plotting $FCR_{C4}/A_t$ versus butane molar percent (%$C_4$m) and the coefficients $a_{C4}$, $b_{C4}$ and $C_{C4}$ then calculated from a "linear regression".

The spectra of the unknown samples are recorded and then ($A_t$), ($A_{C2}$) and ($FCR_{C4}$) of the unknown sample are calculated.

The ethylene content (% molar fraction C2m) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction C4m) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

$a_{C4}$, $b_{C4}$, $c_{C4}$ $a_{C2}$, $b_{C2}$, $c_{C2}$ are the coefficients of the two calibrations.

Changes from mol% to wt% are calculated by using molecular weigths.

Amount (wt%) of comonomer of components A-C are calculated by using the relation;

$$Com_{tot}=WaCom_A+WbCom_B+WcCom_C$$

wherein Wa, Wb and Wc are the relative amount of components A, B and C (A+B+C=1)

Comtot, ComA, ComB, ComC are the amounts of comonomer in the composition (tot) and in components A-C.

**Determination of the Haze**

Some films with a thickness of 50 μm are prepared by extruding each test composition in a a single screw Collin extruder (length/diameter ratio of screw 1:25) at a film drawing speed of 7 m/min and a melt temperature do 210-250 °C.

50 μm film speciments have been used. The haze value is measured using a Gardner photometric unit connected to a Hazemeter type UX-10 or an equivalent instrument having G.E. 1209 light source with filter "C". Reference samples of known haze are used for calibrating the instrument.

Examples 1 - Preparation of polyolefin composition

Catalyst precursor

The solid catalyst component used in polymerization is a Ziegler-Natta catalyst component supported on magnesium chloride, containing titanium and diisobutylphthalate as internal donor, prepared as follows. An initial amount of microspheroidal MgCl2·2.8C2H5OH was prepared according to the method described in Example 2 of USP 4,399,054 but operating at 3,000 rpm instead of 10,000. The so obtained adduct was then subject to thermal dealcoholation at

increasing temperatures from 30 to 130°C operating in nitrogen current until the molar alcohol content per mol of Mg is 1.16. Into a 1000 mL fournecked round flask, purged with nitrogen, 500 mL of $TiCl_4$ were introduced at 0°C. While stirring, 30 grams of the microspheroidal $MgCl_2 \cdot 1.16C_2H_5OH$ adduct (prepared as described above) were added. The temperature was raised to 120°C and kept at this value for 60 minutes. During the temperature increase, an amount of diisobutylphthalate was added such as to have a Mg/ diisobutylphthalate molar ratio of 18. After the mentioned 60 minutes, the stirring was stopped, the liquid siphoned off and the treatment with $TiCl_4$ was repeated at 100°C for 1 hour in the presence of an amount of diisobutylphthalate such as to have a Mg/ diisobutylphthalate molar ratio of 27. After that time the stirring was stopped, the liquid siphoned off and the treatment with $TiCl_4$ was repeated at 100°C for 30 min. After sedimentation and siphoning at 85°C the solid was washed six times with anhydrous hexane (6 x 100 ml) at 60 °C.

Catalyst system and prepolymerization

Before introducing it into the polymerization reactors, the solid catalyst component described above is contacted at 30 °C for 9 minutes with aluminum triethyl (TEAL) and dicyclopentyldimethoxysilane (DCPMS), in a TEAL/DCPMS weight ratio equal to about 15 and in such quantity that the TEAL/solid catalyst component weight ratio be equal to 4.

The catalyst system is then subjected to prepolymerization by maintaining it in suspension in liquid propylene at 50 °C for about 75 minutes before introducing it into the first polymerization reactor.

Polymerization

The polymerization is carried out in continuous in a series of three gas-phase reactors equipped with devices to transfer the product from the first reactor to the second one. Into the first gas phase polymerization reactor a propylene-based polymer (A) is produced by feeding in a continuous and constant flow the prepolymerized catalyst system, hydrogen (used as molecular weight regulator) and propylene all in the gas state. The propylene-based polymer (A) coming from the first reactor is discharged in a continuous flow and, after having been purged of unreacted monomers, is introduced, in a continuous flow, into the second gas phase reactor, together with quantitatively constant flows of hydrogen and ethylene, all in the gas state. In the second reactor a copolymer of ethylene (B) is produced. The product coming from the second reactor is discharged in a continuous flow and, after having been purged of unreacted monomers, is introduced, in a continuous flow, into the third gas phase reactor, together with quantitatively constant flows of hydrogen, ethylene and propylene all in the gas state. In the third reactor an ethylene-propylene polymer (C) is produced. Polymerization conditions, molar ratio of the reactants and composition of the copolymers obtained are shown in Table 1. The polymer particles exiting the third reactor are subjected to a steam treatment to remove the reactive monomers and volatile substances, and then dried. Thereafter the polymer particles are mixed with a usual stabilizing additive composition in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition is made of the following components:

- 0.1% by weight of Irganox® 1010;
- 0.1% by weight of Irgafos® 168;
- 0.04% by weight of DHT-4A (hydrotalcite);

all percent amounts being referred to the total weight of the polymer and stabilizing additive composition.

The said Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos® 168 is tris(2,4-di-tert.-butylphenyl)phosphite. The characteristics relating to the polymer composition, reported in Table 2, are obtained from measurements carried out on the so extruded polymer, which constitutes the stabilized ethylene polymer composition according to the exemplary embodiments disclosed herein.

Table 1 - Polymerization conditions

| Example | | 1 |
|---|---|---|
| 1st Reactor - component (A) | | |
| Temperature | °C | 60 |
| Pressure | barg | 16 |
| $H_2/C_3$- | mol. | 0.24 |
| Split | wt% | 22 |
| Xylene soluble of (A) ($XS_A$) | wt% | 4.2 |
| MFR of (A) | g/10 min. | 110 |
| 2nd Reactor - component (B) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B * | wt% | 90 |
| $C_4$- content of B * | wt% | 10 |
| Xylene soluble of B ($XS_B$) * | wt% | 16.0 |
| Xylene soluble of (A + B) | wt% | 12.0 |
| MFR of (A + B) | g/10 min. | 35.9 |
| 3rd Reactor - component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |
| Split | wt% | 46 |
| $C_2$- content of C * | wt% | 52 |
| Xylene soluble of (C) (XSc)* | wt% | 83 |
| Notes: C2- = ethylene (IR); C3- = propylene (IR); C4- = 1-butene (IR); split = amount of polymer produced in the concerned reactor. * Calculated values. | | |

Comparative example 2

Comparative example 2 is an heterophasic polymer comprising a propylene ethylene matrix and a two propylene ethylene rubber phases component c containing only 19.5 wt% of ethylene derived units.

The feature of the polymer of example 1 and comparative example 2 are reported on table 2

Table 2

| Example | | 1 | comp 2 |
|---|---|---|---|
| component A | | | |
| C2 content | wt% | 0 | 3.5 |

(continued)

| Example | | 1 | comp 2 |
|---|---|---|---|
| component A | | | |
| XSA | wt% | 4.2 | <6.5 |
| MFR | g/10 min | 110 | 25 |
| split | wt% | 22 | 31.8 |
| component B | | | |
| XSB* | wt% | 16 | 5.5 |
| C2 content* | wt% | 90.0 | 16 |
| C4 content* | wt% | 10.0 | np |
| split | wt% | 32 | 39.5 |
| MFR of (A + B) | g/10 min | 35.9 | 1.2 |
| Component C | | | |
| XSC* | wt% | 83 | 64 |
| C2 content* | wt% | 52 | 19.5 |
| split | wt% | 446 | 28.7 |
| total composition | | | |
| MFR | g/10 min | 1.61 | 2.5 |
| IV on soluble in Xylene | dl/g | 2.4 | 3.2 |
| C2 ethylene ; C4 1-butene;<br>* calculated | | | |

The polymers of example 1 and comparative example 2 have been used to produce cast film of 50 micron thickness. The films have been analyzed and the results are reported on table 3

Table 3

| example | | 1 | comp 2 |
|---|---|---|---|
| haze | % | 18.3 | 55 |
| MET (MD) | $N/mm^2$ | 235 | 77 |
| Gels>2.5 mm | $nr/m^2$ | 0 | 0 |
| Gels 1.5-2.5 mm | $nr/m^2$ | 0 | 0 |
| Gels 0.7-1.5 mm | $nr/m^2$ | 0 | 1 |
| Gels 0.5-0.7 mm | $nr/m^2$ | 2 | 3 |

From table 3 clearly results that the composition according to the invention has a considerably better haze and low number of Gels.

## Claims

**1.** A film comprising a polyolefin composition comprising:

A) 5-35% by weight of a propylene homopolymer containing 5% by weight or less of a fraction soluble in xylene at 25°C ($XS_A$), or a propylene ethylene copolymer containing 90% by weight or more of propylene units; containing 5% by weight or less of a fraction soluble in xylene at 25°C ($XS_A$), both the amount of propylene units

and of the fraction $XS_A$ being referred to the weight of A);
B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C ($XS_B$), both the amount of alpha-olefin units and of the fraction $XS_B$ being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

**2.** The film according to claim 1 wherein:

Component A ranges from 10 % by weight to 30 % by weight;
Component B ranges from 25 % by weight to 45 % by weight; and
Component C ranges from 35 % by weight to 55 % by weight;

**3.** The film according to claims 1 or 2 wherein

Component A ranges from 15 % by weight to 25 % by weight;
Component B ranges from 30 % by weight to 40 % by weight; and
Component C ranges from 40 % by weight to 50 % by weight; and

**4.** The film according to anyone of claims 1-3 wherein component A) is a propylene homopolymer.

**5.** The film according to anyone of claims 1-4 wherein component B) is a copolymer of ethylene and a $C_3$-$C_8$ alpha-olefin containing from 5% to 15 % by weight of alpha-olefin units.

**6.** The film according to anyone of claims 1-5 wherein component C) is a copolymer of ethylene and propylene containing from 37% to 65% by weight of ethylene units.

**7.** The film according to anyone of claims 1-6 wherein component (A) has the melt flow rate (230°C/2.16 kg) ranging between 50 and 200 g/10 min;

**8.** The film according to anyone of claims 1-7 wherein component (B) has the melt flow rate (230°C/2.16 kg) ranging between 0.1 and 70 g/10 min;

**9.** The film according to anyone of claims 1-8 wherein the polyolefin composition has a melt flow rate (230°C/2.16 kg) comprised between 0.5 to 25 g/10m;

**10.** The film according to anyone of claims 1-9 wherein the polyolefin composition has an intrinsic viscosity [$\eta$] (measured in tetrahydronaphthalene at 135 °C) of the xylene soluble fraction at 25°C comprised between 1.5 to 4.0 dl/g.

**11.** The film according to anyone of claims 1-10 wherein the polyolefin composition has an intrinsic viscosity [$\eta$] (measured in tetrahydronaphthalene at 135 °C) of the xylene soluble fraction at 25°C comprised between 2.0 to 3.5 dl/g.

**12.** The film according to anyone of claims 1-11 being a cast film.

**13.** The film according to anyone of claims 1-11 being a bioriented film.

**14.** The film according to anyone of claims 1-11 being a blown film.

**Patentansprüche**

**1.** Folie, umfassend eine Polyolefinzusammensetzung, umfassend:

(A) 5 bis 35 Gew.% von einem Propylenhomopolymer, das 5 Gew.% oder weniger von einer in Xylol bei 25 °C

($XS_A$) löslichen Fraktion enthält, oder einem Propylen-Ethylen-Copolymer, das 90 Gew.% oder mehr Propyleneinheiten enthält; 5 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von (A) beziehen;
(B) 20 bis 50 Gew.% von einem Copolymer von Ethylen und einem $C_3$- bis Cs-alpha-Olefin, das 0,1 Gew.% bis 20 Gew.% alpha-Olefineinheiten enthält und 25 Gew.% oder weniger von einer in Xylol bei 25 °C löslichen Fraktion ($XS_B$) enthält, wobei sich sowohl die Menge der alpha-Olefineinheiten als auch diejenige der Fraktion $XS_B$ auf das Gewicht von (B) beziehen; und
(C) 30 bis 60 Gew.% von einem Copolymer von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;

die Mengen von (A), (B) und (C) sich auf das Gesamtgewicht von (A) + (B) + (C) beziehen, wobei die Summe der Mengen von (A), (B) und (C) 100 ergibt.

**2.** Folie nach Anspruch 1, wobei:

Komponente A im Bereich von 10 Gew.% bis 30 Gew.% liegt;
Komponente B im Bereich von 25 Gew.% bis 45 Gew.% liegt; und
Komponente C im Bereich von 35 Gew.% bis 55 Gew.% liegt.

**3.** Folie nach Anspruch 1 oder 2, wobei:

Komponente A im Bereich von 15 Gew.% bis 25 Gew.% liegt;
Komponente B im Bereich von 30 Gew.% bis 40 Gew.% liegt; und
Komponente C im Bereich von 40 Gew.% bis 50 Gew.% liegt.

**4.** Folie nach einem der Ansprüche 1 bis 3, wobei Komponente (A) ein Propylenhomopolymer ist.

**5.** Folie nach einem der Ansprüche 1 bis 4, wobei Komponente (B) ein Copolymer von Ethylen und einem $C_3$- bis Cs-alpha-Olefin ist, das 5 Gew.% bis 15 Gew.% alpha-Olefineinheiten enthält.

**6.** Folie nach einem der Ansprüche 1 bis 5, wobei Komponente (C) ein Copolymer von Ethylen und Propylen ist, das 37 Gew.% bis 65 Gew.% Ethyleneinheiten umfasst.

**7.** Folie nach einem der Ansprüche 1 bis 6, wobei Komponente (A) eine Schmelzflussrate (230 °C/2,16 kg) im Bereich zwischen 50 und 200 g/10 min aufweist.

**8.** Folie nach einem der Ansprüche 1 bis 7, wobei Komponente (B) eine Schmelzflussrate (230 °C/2,16 kg) im Bereich zwischen 0,1 und 70 g/10 min aufweist.

**9.** Folie nach einem der Ansprüche 1 bis 8, wobei die Polyolefinzusammensetzung eine Schmelzflussrate (230 °C/2,16 kg) zwischen 0,5 bis 25 g/10 min aufweist.

**10.** Folie nach einem der Ansprüche 1 bis 9, wobei die Polyolefinzusammensetzung eine Grenzviskosität [$\eta$] (gemessen in Tetrahydronaphthalin bei 135 °C) der in Xylol löslichen Fraktion bei 25 °C aufweist, die zwischen 1,5 und 4,0 dl/g liegt.

**11.** Folie nach einem der Ansprüche 1 bis 10, wobei die Polyolefinzusammensetzung eine Grenzviskosität [$\eta$] (gemessen in Tetrahydronaphthalin bei 135 °C) der in Xylol löslichen Fraktion bei 25 °C aufweist, die zwischen 2,0 und 3,5 dl/g liegt.

**12.** Folie nach einem der Ansprüche 1 bis 11, die eine Gießfolie ist.

**13.** Folie nach einem der Ansprüche 1 bis 11, die eine biorientierte Folie ist.

**14.** Folie nach einem der Ansprüche 1 bis 11, die eine Blasfolie ist.

## Revendications

1. Film comprenant une composition polyoléfinique comprenant :

   A) 5 à 35 % en poids d'un homopolymère de propylène contenant 5 % en poids ou moins d'une fraction soluble dans le xylène à 25 °C ($XS_A$) ou d'un copolymère de propylène-éthylène contenant 90 % en poids ou plus de motifs de propylène ; contenant 5 % en poids ou moins d'une fraction soluble dans le xylène à 25 °C ($XS_A$), à la fois la quantité de motifs de propylène et de la fraction $XS_A$ se rapportant au poids de A) ;
   B) 20 à 50 % en poids d'un copolymère d'éthylène et d'une alpha-oléfine en $C_3$-$C_8$ contenant 0,1 % à 20 % en poids de motifs d'alpha-oléfine et contenant 25 % en poids ou moins d'une fraction soluble dans le xylène à 25 °C ($XS_B$), à la fois la quantité de motifs d'alpha-oléfine et de la fraction $XS_B$ se rapportant au poids de (B) ; et
   C) 30 à 60 % en poids d'un copolymère d'éthylène et de propylène contenant 25 % à 75 % en poids de motifs d'éthylène et contenant 40 % à 95 % en poids d'une fraction soluble dans le xylène à 25 °C (XSc), à la fois la quantité de motifs d'éthylène et de la fraction XSc se rapportant au poids de (C) ;

   les quantités de (A), (B) et (C) se rapportant au poids total de (A) + (B) + (C), la somme des quantités (A) + (B) + (C) valant 100.

2. Film selon la revendication 1 :

   le constituant A représentant 10 % en poids à 30 % en poids ;
   le constituant B représentant 25 % en poids à 45 % en poids ; et
   le constituant C représentant 35 % en poids à 55 % en poids.

3. Film selon les revendications 1 ou 2 :

   le constituant A représentant 15 % en poids à 25 % en poids ;
   le constituant B représentant 30 % en poids à 40 % en poids ; et
   le constituant C représentant 40 % en poids à 50 % en poids.

4. Film selon l'une quelconque des revendications 1 à 3, le constituant A) étant un homopolymère de propylène.

5. Film selon l'une quelconque des revendications 1 à 4, le constituant B) étant un copolymère d'éthylène et d'une alpha-oléfine en $C_3$-$C_8$ contenant 5 % à 15 % en poids de motifs d'alpha-oléfine.

6. Film selon l'une quelconque des revendications 1 à 5, le constituant C) étant un copolymère d'éthylène et de propylène contenant de 37 % à 65 % en poids de motifs d'éthylène.

7. Film selon l'une quelconque des revendications 1 à 6, le constituant (A) présentant un indice de fluidité à chaud (230 °C/2,16 kg) situé dans la plage entre 50 et 200 g/10 min.

8. Film selon l'une quelconque des revendications 1 à 7, le constituant (B) présentant un indice de fluidité à chaud (230 °C/2,16 kg) situé dans la plage entre 0,1 et 70 g/10 min.

9. Film selon l'une quelconque des revendications 1 à 8, la composition polyoléfinique présentant un indice de fluidité à chaud (230 °C/2,16 kg) compris entre 0,5 et 25 g/10 min.

10. Film selon l'une quelconque des revendications 1 à 9, la composition polyoléfinique présentant une viscosité intrinsèque [$\eta$] (mesurée dans du tétrahydronaphtalène à 135 °C) de la fraction soluble dans le xylène à 25 °C comprise entre 1,5 et 4,0 dl/g.

11. Film selon l'une quelconque des revendications 1 à 10, la composition polyoléfinique présentant une viscosité intrinsèque [$\eta$] (mesurée dans du tétrahydronaphtalène à 135 °C) de la fraction soluble dans le xylène à 25 °C comprise entre 2,0 et 3,5 dl/g.

12. Film selon l'une quelconque des revendications 1 à 11, qui est un film coulé.

13. Film selon l'une quelconque des revendications 1 à 11, qui est un film bi-orienté.

**14.** Film selon l'une quelconque des revendications 1 à 11, qui est un film soufflé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03076511 A
- US 4399054 A
- EP 45977 A
- EP 361493 A
- EP 728769 A


### Non-patent literature cited in the description


- **HUGGINS, M.L.** *J. Am. Chem. Soc.,* 1942, vol. 64, 2716
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloridediethylaluminum chloride. *Macromolecules,* 1982, vol. 15, 1150